# EUROPÄISCHE PATENTSCHRIFT

(11) **EP 2 772 236 B1**
(45) Veröffentlichungstag und Bekanntmachung des Hinweises auf die Patenterteilung: **01.06.2016**
(21) Anmeldenummer: 12843463.6
(22) Anmeldetag: 12.10.2012
(51) Int. Cl.: B62B 5/02, A61G 5/06

(54) **WAGEN ZUM TRANSPORT VON BEHINDERTEN IN EINEM ROLLSTUHL AUF EINER ROLLTREPPE**
TROLLEY FOR TRANSPORTING INVALIDS IN A WHEELCHAIR ON AN ESCALATOR
CHARIOT POUR TRANSPORTER DES INVALIDES EN FAUTEUIL OU SUR BRANCARD SUR UN ESCALATOR

(30) Priorität: 25.10.2011 RU 2011143183
(43) Veröffentlichungstag der Anmeldung: 03.09.2014
(73) Patentinhaber: Kochemasov, Rashid Aminovich, St.Petersburg 198328 (RU)
(72) Erfinder: KOCHEMASOV, Rashid Aminovich, St.Petersburg 198328 (RU); KOCHEMASOV, Anton Rashidovich, St.Petersburg 198328 (RU)
(74) Vertreter: Jeck, Anton
(86) Internationale Anmeldenummer: PCT/RU2012/000829
(87) Internationale Veröffentlichungsnummer: WO 2013/062439

(56) Entgegenhaltungen:
- DE-A1- 19 612 538
- JP-A- H1 178 905
- JP-A- H1 191 584
- JP-A- 2000 264 220
- RU-C1- 2 082 369
- RU-C1- 2 410 071
- US-A- 4 556 229

## Beschreibung

Die Erfindung bezieht sich auf Transportmittel und kann zur Beförderung von Behinderten in Rollstühlen sowie von Kinderwagen auf Rolltreppen in der Untergrundbahn verwendet werden.

Bekanntlich ist eine Rolltreppe ein Transportmittel mit erhöhter Gefahr. Das gilt insbesondere bei der Beförderung von Behinderten sowie Kindern in Kinderwagen auf Rolltreppen. Dieses Problem ist nicht nur für Russland sondern auch für das Ausland von Bedeutung. Im Ausland sind manche U-Bahn-Stationen für diesen Zweck mit speziellen Fahrstühlen ausgestattet. In Russland ist das aber nicht der Fall, denn ein solcher Umbau setzt einen sehr großen technischen und finanziellen Aufwand voraus, besonders wenn es um tief angelegte Stationen, wie z. B. in der U-Bahn von St. Petersburg, geht.

Aus dem Stand der Technik ist ein Transportwagen für Rolltreppen nach einem japanischen Patent bekannt (JP 2002332186, Truck for escalator), wonach der Behindertenrollstuhl auf der Rolltreppe hoch- und hinunterfährt, indem er in einen Transportwagen aufgestellt wird. Der Transportwagen ist mit zwei auseinandersitzenden Räderpaaren versehen. Der Achsabstand zwischen den vorderen und den hinteren Rädern entspricht ca. der Breite von zwei Rolltreppenstufen. Dabei ist ein Räderpaar mit einer Stütz-Hebevorrichtung vereinigt, deren maximale Hubhöhe mit der Gesamthöhe von zwei Stufen der Rolltreppe zusammenfällt.

Weitere Transportwagen für Rolltreppen sind aus JP H11 91584 A und JP 2000 264220 A bekannt. Aus dem Stand der Technik ist zudem eine Rolltreppenstütze für einen Behindertenrollstuhl bekannt (Patentanmeldung JP 2010137982, Escalator with footstep for wheelchair). Gemäß dieser technischen Lösung wird das Vorderrad des Rollstuhls auf eine Rolltreppenstufe aufgestellt. Um die richtige waagerechte Lage und den sicheren Stand während der Hoch-(Abwärts-)Fahrt auf der Rolltreppe zu erreichen, wird eine Stützvorrichtung verwendet. Die Stützvorrichtung besteht aus zwei miteinander gekoppelten Hubbühnen. Die Hubbühnen stützen sich auf Nachbarstufen der Rolltreppe ab. Dabei steigt eine der Hubbühnen auf die Höhe von einer Rolltreppenstufe und die andere auf die Höhe von zwei Rolltreppenstufen hinauf. Allerdings setzt der Betrieb einer solchen Vorrichtung voraus, dass die Rolltreppe beim Ein- und Ausstieg des Behindertentransportwagens angehalten wird.

Der nächstkommende Stand der Technik ist eine technische Lösung nach dem Patent RU 2220696, Transportmittel für Behinderte. Diese Vorrichtung enthält einen Rahmen mit einem Sitz und einen externen Betätigungsgriff zur Lenkung des Transportwagens. Der Rahmen ist mit Paaren von An- und Abtriebsstützrädern ausgestattet, um die Fahrt über eine flache Oberfläche zu sichern, und hat Stützelemente. Darüber hinaus weist dieser Transportwagen komplizierte kinematische Einheiten auf, um den unabhängigen Aufstieg des Transportwagens über die Treppe zu ermöglichen. Leider ist diese Konstruktion zu kompliziert und kann darüber hinaus keine Sicherheit während der Auf- und Abwärtsfahrt auf der Rolltreppe gewährleisten.

Es ist Aufgabe der Erfindung, einen zuverlässigen und verfahrenstechnisch einfachen Transportwagen zur Beförderung von Behindertenrollstühlen auf Rolltreppen zu entwickeln.

Die gestellte Aufgabe wird durch die Merkmale des Anspruchs 1 gelöst.

Der Transportwagen nach der Erfindung weist einen Tragrahmen mit zwei Räderpaaren auf, um die Fahrt über eine flache Oberfläche zu bewerkstelligen, und ist mit zwei Stützelementen sowie mit einem externen Betätigungsgriff zur externen Lenkung des Transportwagens versehen. Der Tragrahmen ist Π-förmig (U-förmig) ausgebildet. Dabei ist auf dem Tragrahmen ein Gerüst aufgebaut, um den Rollstuhl aufzunehmen. Das Gerüst ist um einen Steigungswinkel der Rolltreppe senkrecht verschwenkbar und in der oberen Stellung feststellbar ausgebildet. Der Abstand zwischen den Achsen der Räderpaare ist gleich drei Stufen der Rolltreppe (die Gesamtbreite von drei Nachbarstufen). Der Abstand zwischen den Paaren der vorderen und der hinteren Stützelemente, die sich zwischen den Räderpaaren befinden und für die Beförderung von Transportwagen auf der Rolltreppe sorgen, ist gleich zwei Stufen (die Gesamtbreite von zwei Nachbarstufen): Dabei ist der Raddurchmesser größer als die Höhe der Stützelemente.

Der technische Effekt der beanspruchten Erfindung ist die Fertigungsfreundlichkeit der Konstruktion der Einrichtung sowie ihre hohe Sicherheit während der Beförderung des Transportwagens auf der Rolltreppe.

Vorteilhafte Ausgestaltungen des Transportwagens sind den Unteransprüchen zu entnehmen.

Bei einer vorteilhaften Ausgestaltung sind die Stützelemente des Transportwagens in Form von Stützschuhen ausgebildet. Diese sind in Seitenansicht dreieckig. Der Winkel zwischen der Standfläche des Stützschuhs und dem Tragrahmen ist gleich dem Steigungswinkel der Rolltreppe (bei den meisten Rolltreppen beträgt dieser Winkel 30°). Dabei können Reibungsbeläge auf der unteren Fläche der Stützelemente angebracht sein.

Gemäß einer weiteren Ausgestaltung kann der Transportwagen mit einem Hubwerk, z. B. einem Hebel, einer Hebewinde usw., ausgerüstet sein, um das Gerüst zu verschwenken.

Gemäß einer weiteren Ausgestaltung wird der Transportwagen mit Sicherheitsgurten versehen, um den Rollstuhl und den Behinderten zu sichern.

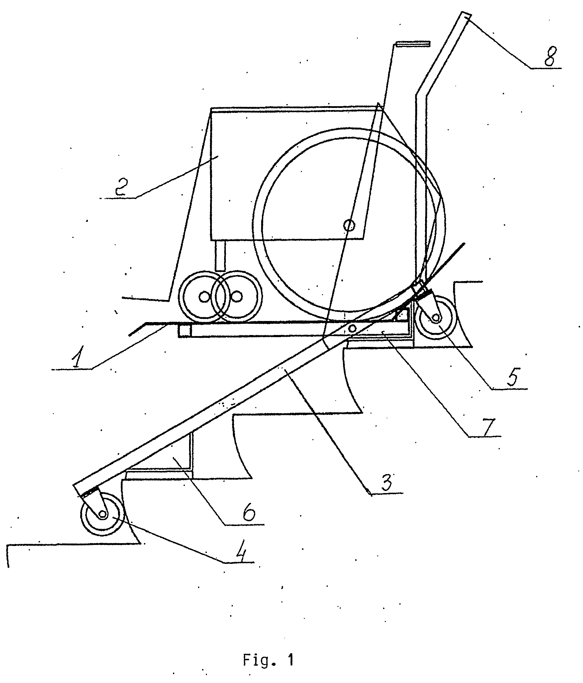

Das Wesen der Erfindung wird anhand einer Zeichnung nach Fig. 1 näher beschrieben.

Der dargestellte Transportwagen befindet sich auf den Stufen einer Rolltreppe. Ein Rollstuhl 2 zur Beförderung eines Behinderten ist auf einem Gerüst 1 des Transportwagens aufgesetzt. Der Transportwagen enthält einen Tragrahmen 3, vordere Räderpaare 4 und hintere Räderpaare 5, vordere Stützelemente 6 und hintere Stützelemente 7 sowie einen externen Betätigungsgriff 8.
Der Transportwagen zur Beförderung von Behinderten in Rollstühlen 2 auf Rolltreppen weist den Tragrahmen 3 auf. Der Tragrahmen 3 ist mit einem Betätigungsgriff 8 zur externen Lenkung des Transportwagens versehen, der mit den vorderen Räderpaaren 4 und den hinteren Räderpaaren 5 versehen ist. Die Räderpaare 4 und 5 sorgen für eine Fahrt des Transportwagens über eine flache Oberfläche. Darüber hinaus ist der Tragrahmen 3 mit vorderen Stützelementen 6 und hinteren Stützelementen 7 ausgerüstet. Auf dem Π-förmigen Tragrahmen 3 ist das Gerüst 1 zur Aufnahme des Rollstuhls aufgesetzt. Das Gerüst 1 ist um einen Steigungswinkel der Rolltreppe senkrecht verschwenkbar und in der oberen Stellung feststellbar ausgebildet. Der Abstand zwischen den Achsen der Räderpaare 4 und 5 ist erfahrungsgemäß gleich drei Schritte der Stufen (Gesamtbreite von drei Nachbarstufen) der Rolltreppe gewählt. Der Abstand zwischen den vorderen und hinteren Stützelementen 6 und 7, die sich zwischen den Räderpaaren 4 und 5 befinden und für die Beförderung des Transportwagens auf der Rolltreppe sorgen, ist unter Beachtung der Sicherheitsbedingungen gewählt. Dieser Abstand ist gleich zwei Stufen (Gesamtbreite von zwei Nachbarstufen) der Rolltreppe gewählt. Dabei ist der Raddurchmesser größer als die Höhe der Stützelemente 6 und 7.

Die hohe Zuverlässigkeit des erfindungsgemäßen Transportwagens ist durch die Anordnung und die Bauweise der Stützelemente 6 und 7 erreicht. Die Fertigungsfreundlichkeit des Transportwagens ist dadurch bedingt, dass die Konstruktion keine mechanischen Vorrichtungen aufweist, welche eine Versetzung der Auflagerung von den Rädern auf den Stützelementen 6 und 7 sicherstellen, wenn von einem waagerechten Abschnitt der Rolltreppe auf einen Gefälleabschnitt und zurück gewechselt wird.

Die Erfindung ist vorgesehen, um Behinderte in Rollstühlen sowie einen Kinderwagen auf Rolltreppen in der U-Bahn zu befördern. Es geht also darum, Quellen erhöhter Gefahr, wie in der U-Bahn und insbesondere bei Rolltreppen, zu vermeiden. Die gestellte Aufgabe ist durch den Transportwagen wie folgt gelöst:

Ein Begleiter/Helfer des Behinderten bzw. ein Mitarbeiter der U-Bahn befördert den Transportwagen anhand eines externen Betätigungsgriffs 8. Der Transportwagen wird bis ca. 2 bis 3 m zum Ansatz der Rolltreppe (oben oder unten) der U-Bahn vorgefahren. Dabei ist das Gerüst 1 in der oberen Stellung. Danach schwenkt das Gerüst 1 in die untere Stellung und wird dabei zu einer etwas geneigten Rampe. Der Rollstuhl 2 mit dem Behinderten wird die Rampe im Rückwärtsgang hinaufgefahren und am Gerüst 1 festgestellt (arretiert). Der Behinderte sichert sich am Rollstuhl 2 mit einem Sicherheitsgurt (nicht dargestellt), z. B. nach Art und Weise eines PKW-Gurts, ab. Dann bringt der Helfer das Gerüst 1 handbetätigt bzw. mithilfe einer Hubvorrichtung (nicht dargestellt) in die obere Stellung und arretiert es in dieser Stellung.

Sowohl die Auf- als auch die Abwärtsfahrt wird so durchgeführt, dass der Behinderte immer abwärts der Rolltreppe hinabblickt. Der Transportwagen mit dem Behinderten auf dem Rollstuhl 2 wird an die laufende Rolltreppe antransportiert und darauf gefahren. Während der Abwärtsfahrt auf der Rolltreppe blickt der Behinderte somit vorwärts, und während der Hinauffahrt blickt er rückwärts.

Beim Befahren eines waagerechten Abschnitts der Rolltreppe muss der Begleiter den Transportwagen so ausrichten, dass die Räder 4 und 5 des Transportwagens in der Nähe der steigenden Kanten der Stufen sind. Während der weiteren Bewegung über einen Gefälleabschnitt der Rolltreppe wechselt die Auflagerung des Transportwagens von den Rädern 4 und 5 auf die flachen Stützelemente 6 und 7. Die Stützelemente 6 und 7 stellen einen sicheren Stand des Transportwagens sowohl während der Bewegung als auch bei nicht vorgesehenem Anhalten und beim weiteren Ingangsetzen der Rolltreppe sicher. Dies wurde sowohl erfahrungsmäßig als auch mittels entsprechender Berechnungen geprüft. Nach dem Verlassen der Rolltreppe werden die Sicherheitsgurte abgeschnallt. Das Gerüst 1 wird in die untere Stellung gebracht, und der Rollstuhl 2 mit dem Behinderten wird mit dem Transportwagen ausgefahren.

## Patentansprüche

1. Transportwagen zur Beförderung von Behinderten in Rollstühlen (2) auf Rolltreppen, wobei der Transportwagen einen Tragrahmen (3) aufweist, welcher mit zwei Räderpaaren (4 und 5), um die Fahrt über eine flache Oberfläche zu bewerkstelligen, und mit einem externen Betätigungsgriff (8) des Transportwagens versehen ist, wobei auf dem U-förmigen Tragrahmen (3) ein Gerüst (1) aufgesetzt ist, um ein Rollstuhl aufzunehmen, wobei das Gerüst (1) um einen Steigungswinkel der Rolltreppe senkrecht verschwenkbar und in der oberen Stellung feststellbar ausgebildet ist, wobei der Abstand zwischen den Achsen der Räderpaare (4 und 5) ausgelegt ist, die Gesamtbreite von drei Nachbarstufen der Rolltreppe zu entsprechen, **dadurch gekennzeichnet, dass** der Tragrahmen (3) mit zwei Paaren von Stützelementen (6, 7) versehen ist, dass der Abstand zwischen dem vorderen (6) und dem hinteren (7) Paar von Stützelementen, die sich zwischen den Räderpaaren (4 und 5) befinden und für die Beförderung von Transportwagen auf der Rolltreppe sorgen, ausgelegt ist, die Gesamtbreite von drei Nachbarstufen der Rolltreppe zu entsprechen, und dass der Raddurchmesser dabei größer als die Höhe der Stützelemente (6, 7) ist.

2. Transportwagen nach Anspruch 1,
**dadurch gekennzeichnet,**
**dass** die Stützelemente (6, 7) in Form von Stützschuhen ausgebildet sind, die in Seitenansicht dreieckig sind, und
**dass** der Winkel zwischen der Standfläche des Stützschuhs und dem Tragrahmen (3) gleich dem Steigungswinkel der Rolltreppe ist.

3. Transportwagen nach Anspruch 2,
**dadurch gekennzeichnet,**
**dass** an einer unteren Fläche der Stützelemente (6, 7) Reibungsbeläge angebracht sind.

4. Transportwagen nach Anspruch 1,
**dadurch gekennzeichnet,**
**dass** ein Hubwerk vorhanden ist, um das Gerüst (1) zu verschwenken.

5. Transportwagen nach Anspruch 1,
**dadurch gekennzeichnet,**
**dass** der Transportwagen mit Sicherheitsgurten ausgestattet ist, um den Rollstuhl (2) und den Behinderten zu sichern.

## Claims

1. Transport apparatus for the transport of disabled people in wheelchairs (2) on escalators, wherein the transport apparatus comprises a supporting frame (3) provided with two pairs of wheels (4 and 5) designed to effect the ride on a flat surface, and with an external operating handle (8) of the transport apparatus, wherein a frame (1) is placed on the U-shaped supporting frame (3) to accommodate a wheelchair,
wherein the frame (1) is vertically pivotable by an angle of inclination to the escalator, and is formed to be lockable in the up position,
wherein the distance between the axes of the pairs of wheels (4 and 5) is designed to correspond to the total depth of three adjacent steps of the escalator,
**characterized in that**
the supporting frame (3) is provided with two pairs of support elements (6, 7) the distance between the front (6) and rear (7) pairs of support elements which extend between the pairs of wheels (4 and 5) and ensure the transport of trolleys on the escalator, is designed to correspond to the overall depth of three neighbouring steps of the escalator, and the wheel diameter is thus greater than the height of the support elements (6, 7).

2. Transport apparatus according to claim 1,
**characterized in that**
the support elements (6, 7) are constructed in the form of supporting shoes, which are triangular in side view, and
the angle between the support surface of the support shoe and the supporting frame (3) is equal to the angle of inclination of the escalator.

3. Transport apparatus according to claim 2,
**characterized in that**
friction linings are attached to a lower surface of the support elements (6, 7).

4. Transport apparatus according to claim 1,
**characterized in that**
a lifting mechanism is provided to pivot the frame (1).

5. Transport apparatus according to claim 1,
**characterized in that**
the trolley is equipped with seat belts to secure the wheelchair (2) and the disabled person.

## Revendications

1. Chariot transporteur pour le transport de personnes handicapées sur un fauteuil roulant (2) sur escaliers mécaniques où le chariot transporteur présente un cadre support (3) qui est pourvu de deux paires de roues (4 et 5) pour assurer le trajet sur une surface plane et d'un levier de manouvre externe (8) du chariot transporteur,
Où une armature (1) est placée sur le cadre support (3) en forme de U pour accueillir un fauteuil roulant,
Où l'armature (1) est pivotante d'une manière perpendiculaire à l'angle d'inclinaison de l'escalier mécanique et fixable au niveau de la position du haut,
Où la distance entre les axes des paires de roues (4 et 5) est conçue de la manière que la largeur hors tout correspond aux niveaux avoisinants de l'escalier roulant,
Est caractérisé de sorte
que le cadre support est pourvu de deux paires d'éléments de support (6,7)
que la distance séparant la paire antérieure (6) et la paire postérieure (7) des éléments de support se trouvant entre les paires de roues (4 et 5) et permettant le transport du chariot transporteur sur l'escalier mécanique est conçue de la manière que la largeur hors tout correspond aux niveaux avoisinants de l'escalier roulant,
que le diamètre des roues dépasse la hauteur des éléments de support (6,7).

2. Chariot transporteur selon revendication 1 est caractérisé de sorte que Les éléments de support (6,7) sont formés de patins d'appui qui sont triangulaires en vue latérale et que l'angle entre la surface d'appui du patin d'appui et le carde de support (3) est équivaut à l'angle d'inclinaison de l'escalier mécanique.

3. Chariot transporteur selon revendication 2 est caractérisé de sorte que Des revêtements de friction sont installés au niveau de la surface inférieure des éléments de support (6,7).

4. Chariot transporteur selon revendication 1 est caractérisé de sorte qu' Un mécanisme de levage est présent pour faire pivoter l'armature (1).

5. Chariot transporteur selon revendication 1 est caractérisé de sorte que Le chariot transporteur est équipé de ceintures de sécurité pour garantir la sécurité du fauteuil roulant (2) ainsi que de la personne handicapée.
